(19) Europäisches Patentamt
European Patent Office
Office européen des brevets

(11) Veröffentlichungsnummer: **0 325 918 B1**

(12) **EUROPÄISCHE PATENTSCHRIFT**

(45) Veröffentlichungstag der Patentschrift: **31.03.93**

(51) Int. Cl.$^5$: **C08G 18/38**, C08G 18/61, C08G 77/42, C08L 75/04, D06M 15/00

(21) Anmeldenummer: **89100167.9**

(22) Anmeldetag: **05.01.89**

# (54) Modifizierte, perfluoraliphatische Gruppen enthaltende Polyurethane und deren Verwendung.

(30) Priorität: **29.01.88 DE 3802633**
**16.09.88 DE 3831452**

(43) Veröffentlichungstag der Anmeldung:
**02.08.89 Patentblatt 89/31**

(45) Bekanntmachung des Hinweises auf die Patenterteilung:
**31.03.93 Patentblatt 93/13**

(84) Benannte Vertragsstaaten:
**AT BE CH DE ES FR GB IT LI NL SE**

(56) Entgegenhaltungen:
**EP-A- 0 251 334**
**EP-A- 0 298 364**
**WO-A-86/02115**
**US-A- 4 098 742**
**US-A- 4 739 013**

**PATENT ABSTRACTS OF JAPAN, Band 9, Nr. 218 (C-301)[1941], 5. September 1985; & JP-A-60 81 278 (SHINETSU KAGAKU KOGYO K.K.) 09-05-1985**

(73) Patentinhaber: **Pfersee Chemie GmbH**
**Rehlinger Str. 1 Postfach 1153**
**W-8901 Langweid am Lech(DE)**

(72) Erfinder: **Lüdemann, Simpert**
**Birkenweg 1**
**W-8903 Bobingen(DE)**
Erfinder: **Bernheim, Michael, Dr.**
**Sonnenweg 3**
**W-8901 Aystetten(DE)**
Erfinder: **Sandner, Bernhard**
**Ortlerweg 12**
**W-8901 Diedorf(DE)**
Erfinder: **Rössler, Erich**
**Parkstrasse 13**
**W-8901 Stadtbergen(DE)**
Erfinder: **Vogel, Hans-Burkhardt**
**Schöpfheimerstrasse 16**
**W-7850 Lörrach/Brombach(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft modifizierte, perfluoraliphatische Gruppen ($R_f$) enthaltende Polyurethane und deren Verwendung zur öl- und wasserabweisenden Ausrüstung von Fasermaterialien. Daneben wird auch die gemeinsame Verwendung derselben mit Textilhilfsmitteln zur öl- und wasserabweisenden Ausrüstung von Fasermaterialien beschrieben.

Perfluoraliphatische Gruppen enthaltende Polyurethane sind aus dem Stand der Technik bereits bekannt (US-A 3 968 066 und 4 054 592). Es ist auch bekannt, diese Verbindungen zur öl- und wasserabweisenden Ausrüstung von Fasermaterialien heranzuziehen. Diese Ausrüstungen haben jedoch den Nachteil, daß die Wasserabweisung insgesamt gesehen unbefriedigend ist. Aus der DE-A 28 02 392 sind außerdem Polyurethane aus perfluoralkylhaltigen Segmenten und siloxanhaltigen Segmenten bekannt, die zur Textilbehandlung einsetzbar sind. Diese Ausrüstungsmittel bringen zwar in grifflicher Hinsicht eine gewisse Verbesserung, sind aber ebenfalls in Bezug auf Öl- und vor allem Wasserabweisung und deren Wasch- und Reinigungsbeständigkeit noch unbefriedigend (siehe Beispiele).

Es wurde deshalb in der PCT-Anmeldung WO 86/02115 schon vorgeschlagen, durch Mitverwendung ausgewählter Extender, nämlich von NCO-Gruppen enthaltenden Verbindungen mit einem Molekulargewicht von mindestens 450 in blockierter Form, diesen Nachteil zu beseitigen. Tatsächlich wird durch diesen Zusatz eine wasch- und reinigungsbeständige Wasserabweisung erhalten, doch der Griff wird den heutzutage gestellten Anforderungen nicht immer gerecht, da der nach dem Stand der Technik erzielbare Griff häufig zu trocken ist und auch den gewünschten Soft-hand-Effekt mit innerer Weichheit und angenehmer Fülle und Oberflächenglätte nicht annähernd erreicht.

Es wurden nun modifizierte, perfluoraliphatische Gruppen enthaltende Polyurethane gefunden, die allen gestellten Anforderungen gerecht werden.

Die vorliegende Erfindung betrifft somit die im Anspruch 1 näher beschriebenen, modifizierten, perfluoraliphatische Gruppen ($R_f$) enthaltenden Polyurethane. In den Unteranspüchen 2 bis 10 werden bevorzugte erfindungsgemäße Verbindungen unter Schutz gestellt und in den Unteransprüchen 11 bis 18 die Verwendung derselben beansprucht.

Die als Ausgangsverbindungen für den Zweiten Reaktionsschritt, nämlich für die Umsetzung mit funktionelle Gruppen enthaltenden Polysiloxanen verwendeten, freie Hydroxyl- oder Isocyanatgruppen und perfluoraliphatische Gruppen enthaltenden Oligo- und/oder Polyurethane (Verbindungen 1), sind grundsätzlich aus dem aufgezeigten Stand der Technik (US-PSS 3 968 066 und 4 054 592) bekannt. Sie werden im ersten Reaktionsschritt durch Umsetzung von perfluoraliphatische Gruppen ($R_f$) enthaltenden Diolen mit 1 bis 18, insbesondere 6 bis 16 C-Atomen im Perfluoralkylrest mit mehrwertigen Isocyanaten (Di- und/oder Polyisocyanate) erhalten. Einzelheiten können den beiden genannten US-Patentschriften entnommen werden. Als besonders geeignete perfluoraliphatische Gruppen enthaltende Diole haben sich solche der Formel

$$\begin{array}{l} R_f\text{-}CH_2\text{-}CH_2\text{-}S\text{-}CH\text{-}CH_2OH \\ \qquad\qquad\qquad\quad | \\ R_f\text{-}CH_2\text{-}CH_2\text{-}S\text{-}CH\text{-}CH_2OH \end{array}$$

also 2,3-Bis (1,1,2,2-tetrahydroperfluoralkylthio)butan-1,4-diole, ($R_f = -C_{16}F_{33}$ bis $-C_6F_{13}$) erwiesen. Als Di/Polyisocyanate sind besonders gut aliphatische Diisocyanate, z.B. 1,6-Hexamethylendiisocyanat oder Trimethylhexamethylendiisocyanate und Isophorondiisocyanat sowie ein von einer Dimersäure abgeleitetes Diisocyanat (DDJ® 1410 der Firma Henkel Corp.), auch im Gemisch untereinanter, geeignet. Die daraus hergestellten Zubereitungen sind frei von Eigenfarbe.

Entscheidend für den Gegenstand der Erfindung ist nun, daß das Äquivalenzverhältnis bei der Herstellung der Oligo-(poly)urethane (Verbindungen 1) so gewählt wird, daß nach der Reaktion entweder freie OH-Gruppen (Verbindung 1a) oder freie NCO-Gruppen (Verbindung 1b) vorhanden bleiben. Dazu kann die Reaktion in weiten Grenzen gesteuert werden. So werden brauchbare Ausgangssubstanzen zur Herstellung der erfindungsgemäßen modifizierten, perfluoraliphatische Gruppen enthaltenden Polyurethane im Bereich von OH- zu Isocyanatgruppen von 3 : 2 bis 15 : 14 ebenso wie im Bereich von 2 : 3 bis 14 : 15 erhalten und dementsprechend perfluoraliphatische Gruppen enthaltende Polyurethane mit freien OH- bzw. NCO-Gruppen unter Blockbildung gebildet, wobei letztere besonders vorteilhaft eingesetzt werden, da damit das Ende der Reaktion mit den Polysiloxanen in einfacher Weise, z.B. IR-spektroskopisch, ermittelbar ist.

Die weitere Ausgangsverbindung für den zweiten Umsetzungsschritt, der zu den erfindungsgemäßen Polyurethanen führt, sind di- oder mehrfunktionelle Polysiloxane (Verbindungen 2). Je nachdem, ob nun die Verbindung (1) freie OH-Gruppen (Verbindung 1a) oder freie NCO-Gruppen (Verbindung 1b) aufweist, werden unterschiedliche Verbindungen (2) zum Einsatz kommen. Für die Reaktion mit den freien OH-Gruppen kommen vor allem solche mit Epoxi- und Carboxigruppen in Frage,
und es werden daher als Verbindungen (2) solche Polysiloxane mit mindestens 2 funktionellen Gruppen herangezogen, die derartige Gruppen (Verbindung 2 a) aufweisen, und zwar vorzugsweise in $\alpha$, $\omega$-Stellung. Freie NCO-Gruppen dagegen reagieren vor allem mit OH- und Amin- oder Amidgruppen, so daß für die Reaktion der Verbindungen (1 b) vor allem solche Verbindungen (2) in Betracht zu ziehen sind, die OH-, insbesondere carbinolfunktionell (OH-Gruppe über C-Kette an Silicium gebunden) oder amin/amidfunktionell (Verbindung 2 b) sind. Auch von den Verbindungen (2 b) werden wiederum diejenigen bevorzugt verwendet, die difunktionell sind und die die Funktionalität in $\alpha$, $\omega$-Stellung aufweisen. In jedem Fall jedoch sind die funktionellen Gruppen des Polysiloxans (von denen mindestens zwei im Polysiloxan vorliegen müssen) Epoxi-, Carboxi-, Hydroxy-, Amino- und/oder Amidogruppen. Im übrigen sind an dem Aufbau der Polysiloxane keine besonderen Bedingungen geknüpft, wobei andere reaktionsfähige Gruppen weitgehend auszuschließen und ansonsten die üblichen Substituenten, wie Ethyl-, Phenyl- und insbesondere Methylreste, vorhanden sind.
Als Beispiele für derartige Verbindungen seien ohne Anspruch auf Vollständigkeit folgende genannt:
$\alpha$, $\omega$-carbinolfunktionelles Dimethylpolysiloxan mit einem Molekulargewicht von 600 bis 10.000,
$\alpha$, $\omega$-epoxyfunktionelles Dimethylpolysiloxan mit einem Molekulargewicht von 600 bis 10.000,
$\alpha$, $\omega$-dihydroxifunktionelles Dimethylpolysiloxan mit einem Molekulargewicht von 1200 bis 15.000,
Silikone der Formel

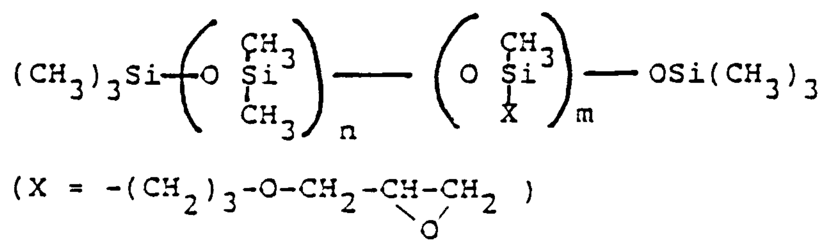

mit einer Viskosität bei 20 °C von ca. 30 bis 100 mPa.s.

Die Verbindungen (1 a) bzw. (1 b) werden mit den Verbindungen (2 a) bzw. (2 b) vorzugsweise in solchen Mengen umgesetzt, daß ein geringer Überschuß an di/mehrfunktionellen Gruppen des Polysiloxans zugegen ist. Es ist aber ohne weiteres möglich, die beiden Reaktionspartner in etwa äquivalenten Mengen zur Reaktion zu bringen. Im allgemeinen wird die Reaktion in einem organischen Lösungsmittel, vor allem in Estern, wie in Butylacetat oder in fluorierten Kohlenwasserstoffen, wie Xylolhexafluorid durchgeführt, um auf diese Weise Systeme zu erhalten, die sich gut weiterverarbeiten lassen. Die Reaktion selbst kann dabei unter normalem Luftdruck unter Ausschluß von Luftfeuchtigkeit vorgenommen werden, vorzugsweise wird aber unter Inertgas, insbesondere Stickstoff, gearbeitet. Die Temperatur bei der Umsetzung liegt bei 30 bis 180 °C, insbesondere 80 bis 120 °C. Ohne die Mitverwendung eines Katalysators nimmt die Reaktion sehr lange Zeiten zur Herstellung des erfindungsgemäßen, modifizierten, perfluoraliphatische Gruppen enthaltenden Polyurethans in Anspruch. Es wird deshalb bevorzugt diese Reaktion in Gegenwart von aus der Literatur bekannten Katalysatoren durchgeführt. Als Beispiele seien Dialkylzinndicarboxylate, z.B. Dibutylzinndilaurat und tertiäre Amine, wie Triethylamin und N-Benzyldimethylamin genannt. Die Dauer der Reaktion ist abhängig von den gewählten Bedingungen, nimmt aber selbst unter optimalen Voraussetzungen noch 2 bis 8 Stunden in Anspruch, wobei der Endpunkt der Reaktion dann erreicht wird, wenn keine freien Gruppen der als Ausgangsverbindungen verwendeten Verbindungen (1) mehr vorhanden sind. Dadurch nun, daß freie NCO-Gruppen leicht bestimmt werden können, werden besonders bevorzugt die Verbindungen (1 b) mit den Verbindungen (2 b) umgesetzt.
Die so hergestellten erfindungsgemäßen Umsetzungsprodukte können als solche direkt in Form von organischen Lösungen zur öl- und wasserabweisenden Ausrüstung für Fasermaterialien, insbesondere Textilien, herangezogen werden. Das Arbeiten mit organischen Lösungsmitteln, insbesondere halogenierten Kohlenwasserstoffen, ist aber zunehmender Kritik ausgesetzt und es werden deshalb vorzugsweise die erfindungsgemäßen Produkte in lösungsmittelfreie, wäßrige Dispersionen überführt und in dieser Form zur Anwendung gebracht.

Die Herstellung der Dispersionen erfolgt in bekannter Weise und der Fachmann wird keine Schwierigkeiten haben, hier die richtigen Emulgatoren und die richtige Verfahrensweise zu wählen. Der Vollständigkeit halber seien aber einige Emulgatoren und auch eine Standardmethode zur Herstellung der Dispersionen aufgeführt. Als Emulgatoren kommen - bedingt durch die weitere Verwendung der Dispersionen - besonders schwach kationische und nicht-ionische Emulgatoren in Betracht, die in Mengen von 3 bis 50 %, insbesondere 8 bis 40 %, bezogen auf Feststoff, eingesetzt werden.

Als Beispiele für Emulgatoren sind Ethylenoxidaddukte von Fettalkoholen, insbesondere solche von primären und/oder sekundären, linearen oder verzweigten Alkoholen mit 8 bis 16 C-Atomen und ethoxylierte $C_6$-bis $C_{12}$-Alkylphenole, wobei die Anzahl der Ethylenoxideinheiten zwischen 5 und 30 liegt, geeignet. Daneben sind in gleicher Weise auch stickstoffhaltige Emulgatoren, wie sie durch Ethoxilierung von Fettaminen oder Fettsäureamiden entstehen, geeignet, wobei diese Verbindungen durch Zugabe von Säuren auch in Salzform vorliegen können. Beispiele sind 2,6,8-Trimethyl-4-nonyloxihexaethylenoxiethanol, Isotridecylethoxilat mit durchschnittlich 8 Ethylenoxid - einheiten und Hexadecylamin ethoxiliert mit durchschnittlich 15 Mol Ethylenoxid in Form des Acetats.

Zur Herstellung der wäßrigen Dispersionen wird im allgemeinen das Wasser und der Emulgator gemischt, auf ca. 60 bis 80 °C erwärmt und das auf etwa gleiche Temperatur erwärmte erfindungsgemäße Umsetzungsprodukt, gegebenenfalls von der Herstellung her in Form einer Lösung, einturbiniert. Anschließend wird die entstandene Vordispersion auf einer Hochdruckhomogenisiervorrichtung bei erhöhtem Druck und 40 bis 60 °C homogenisiert. Abschließend wird eventuell von der Herstellung noch vorhandenes Lösungsmittel unter vermindertem Druck abgezogen. Die erhaltenen Dispersionen weisen etwa 10 bis 40 Gew.% an Wirksubstanz auf.

Die so erhaltenen wäßrigen Dispersionen sind ebenso wie die organischen Lösungen der erfindungsgemäßen Umsetzungsprodukte in hervorragender Weise zur öl- und wasserabweisenden Ausrüstung von Fasermaterialien, insbesondere Textilien geeignet. Die verwendeten Mengen werden dabei unter Berücksichtigung einer üblichen Flottenaufnahme so gewählt, daß die Ausrüstungsbäder etwa 1,5 bis 4,5 g/l Fluor enthalten, was üblicherweise einer Einsatzmenge von 15 bis 100 g/l der wie beschrieben hergestellten Dispersionen entspricht. Die Ausrüstung selbst erfolgt in bekannter Art und Weise, vornehmlich durch Foulardieren, Trocknen und Kondensieren, wobei aber auch Sprühen besonders geeignet ist.

Es ist erfindungsgemäß überraschenderweise möglich, mit nur einer einzigen Komponente sehr gute, reinigungs- und waschbeständige Öl- und Wasserabweisung und gleichzeitig einen oberflächenglatten Griff mit besonderer innerer Weichheit auf allen gängigen Fasermaterialien zu erhalten. Durch Kombination von Perfluoralkylpolyurethanblöcken verschiedener Größe mit Silikonen unterschiedlichen Molekulargewichts ist es möglich, die Effekte und den Griff nach Belieben zu variieren.

Es ist dabei zusätzlich möglich, das erfindungsgemäße Produkt hinsichtlich des Griffes nochmals deutlich zu verbessern, wenn den wie beschrieben hergestellten Dispersionen selbst bzw. den daraus bereiteten wäßrigen Flotten, bezogen auf die Dispersion des erfindungsgemäßen Umsetzungsproduktes, 15 bis 100 Gew.%, insbesondere 30 bis 50 Gew.% einer 20- bis 35-%igen Dispersion eines emulgierbaren Polyethylens (Polyethylenwachs) mit einer Dichte (bei 20 °C) von mindestens 0,92 g/cm$^3$ und einer Säurezahl von mindestens 5 zugesetzt werden. Dies hier verwendbare emulgierbare Polyethylen (Polyethylenwachs) ist bekannt und im Stand der Technik (DE- C 2 359 966, DE-A 2 824 716 und DE-A 1 925 993) ausführlich beschrieben. In aller Regel handelt es sich bei dem emulgierbaren Polyethylen um solches mit funktionellen Gruppen, insbesondere COOH-Gruppen, die teilweise verestert sein können. Diese funktionellen Gruppen werden durch Oxidation des Polyethylens eingeführt. Es ist aber auch möglich, durch Copolymerisation von Ethylen mit z.B. Acrylsäure, die Funktionalität zu erhalten. Die im Rahmen der vorliegenden Erfindung verwendbaren emulgierbaren Polyethylene weisen bei 20° eine Dichte von mindestens 0,92 g/cm$^3$ und eine Säurezahl von mindestens 5 auf. Besonders bevorzugt werden solche emulgierbaren Polyethylene in Form von Dispersionen im Rahmen der vorliegenden Erfindung verwendet, die eine Dichte bei 20° von 0,95 bis 1,05 g/cm$^3$, eine Säurezahl von 10 bis 60 und eine Verseifungszahl von 15 bis 80 besitzen. Im Handel ist dieses Material im allgemeinen in Form von Schuppen, Pastillen und ähnlichem zu haben. Die Herstellung der Dispersionen aus diesem Material ist im Stand der Technik ausführlich beschrieben.

Es ist selbstverständlich, daß dem Ausrüstungsbad im Rahmen der vorliegenden Erfindung weitere, in der Textilindustrie übliche Hilfsmittel zugefügt werden können. Besonders hervorgehoben seien in diesem Zusammenhang Knitterfreimittel, da hierbei nicht nur die gewünschte Knitterfestigkeit, sondern zusätzlich auch eine gewisse Stabilisierung der Effekte erzielt wird. Daneben sind aber auch Füllharze, Flammschutzmittel, Schiebefestmittel und ähnliche Produkte sowie gegebenenfalls die außerdem notwendigen Katalysatoren, alle in üblichen Mengen, als Zusatzprodukte zu nennen.

Entsprechend einer besonderen Ausgestaltung der vorliegenden Erfindung wurde es als vorteilhaft gefunden, als Textilhilfsmittel wasserabweisende Fluorkohlenstoffverbindungen zusammen mit den wäßrigen Dispersionen der modifizierten, perfluoraliphatische Gruppen enthaltenden Polyurethane zum Einsatz zu bringen. Diese wasserabweisenden Fluorkohlenstoffverbindungen liegen im allgemeinen in wäßriger Dispersion vor und weisen einen Feststoffgehalt von etwa 20 bis 65 Gew.%, insbesondere 40 bis 60 Gew.% und einen Fluorgehalt von mindestens 5 Gew.%, insbesondere mindestens 7 Gew.%, bezogen auf Dispersion, auf. Als besonders geeignete wasserabweisende Fluorkohlenstoffverbindung haben sich perfluoraliphatische Gruppen enthaltende Polymere bzw. Copolymere, die ebenfalls in wäßriger Dispersion vorliegen, erwiesen. Diese Dispersionen sind üblicherweise nicht-ionogenen Charakters und die (Co)polymeren werden durch Polymerisation der bekannten perfluoraliphatische Gruppen enthaltenden Monomeren, insbesondere Acrylatmonomeren, zusammen mit anderen bekannten fluorfreien Monomeren hergestellt, wobei der Fluorgehalt der fertigen Dispersion mindestens 5 Gew.% betragen soll.
Als besonders geeignet haben sich die Produkte ®SCOTCHGARD FC 461 mit 8% Fluor (3M Company) und ®ASAHI GUARD AG 310 mit ca. 9% Fluor (Asahi Glass) erwiesen. Diese wasserabweisenden Fluorkohlenstoffverbindungen in wäßriger Dispersion werden den Behandlungsflotten in Mengen von 5 bis 40 g/l, insbesondere 7 bis 25 g/l zugesetzt.

Es ist dabei durchaus möglich, die üblichen Textilhilfsmittel, vor allem aber die wasserabweisenden Fluorkohlenstoffverbindungen und die modifizierten, perfluoraliphatische Gruppen enthaltenden Polyurethane zu compoundieren und diesen Compound anzuwenden unter Beachtung der entsprechenden Mengenverhältnisse.

Mit den erfindungsgemäßen Produkten können ebenso wie nach den bekannten Verfahren Fasermaterialien aller Art ausgerüstet werden. Als Fasermaterialien sind dabei insbesondere Textilien zu nennen, wobei wiederum diejenigen Textilien bevorzugt in Betracht kommen, die aus Cellulosefasern bestehen oder zumindest teilweise Cellulosefasern enthalten. Als zusätzliche Fasern neben der Cellulose kommen dabei sowohl synthetische Fasern, wie Polyester-, Polyamid- oder Polyacrylnitrilfasern, als auch Wolle in Betracht. Selbstverständlich können die erfindungsgemäßen modifizierten perfluoraliphatische Gruppen enthaltenden Polyurethane auch zur Ausrüstung von reinen Synthesefaser- und Wollfasermaterialien herangezogen werden. Besonders kritisch ist die öl- und wasserabweisende Ausrüstung von Baumwoll/Polyester-Mischgeweben. Und auch hier haben sich die erfindungsgemäßen Produkte in hervorragender Weise bewährt.

Nach dem aufgezeigten neuesten Stand der Technik (PCT-Anmeldung WO 86/02115) werden sehr gute öl- und wasserabweisende Eigenschaften erhalten, die auch eine vollkommen ausreichende Wasch- und Reinigungsbeständigkeit aufweisen. Gegenüber diesem Stand der Technik sind beim erfindungsgemäßen Gegenstand in keiner Weise Abstriche hinsichtlich der Effekte erkennbar, sondern das Effektniveau der bekannten Ausrüstungsverfahren wird ohne Einschränkungen erreicht. Die deutliche Überlegenheit des Anmeldungsgegenstandes liegt dabei in einer entscheidenden Verbesserung des Griffes der ausgerüsteten Textilmaterialien. Während nach dem Stand der Technik nur ein verhältnismäßig harter und vor allem auch trockener Griff resultiert, wird bei der erfindungsgemäßen Verwendung der erfindungsgemäßen Produkte den behandelten Materialien ein weicher, fülliger Griff mit sehr guter Oberflächenglätte verliehen, also ein typischer Soft-hand-Effekt erreicht. Dieses schon sehr hohe Griffniveau läßt sich dabei noch weiter steigern, wenn den Produkten selbst bzw. den Flotten emulgierte Polyethylene zugesetzt werden. Auf diese Weise läßt sich nämlich die innere Weichheit zusätzlich verbessern und die Fülle und Oberflächenglätte ist in besonderer Weise optimiert, ohne daß eine Verschlechterung der wasch- und reinigungsbeständigen Öl- und Wasserabweisung zu beobachten ist, eher werden diese Werte etwas angehoben.

Durch die Mitverwendung der wasserabweisenden Fluorkohlenstoffverbindungen im Rahmen der vorliegenden Erfindung werden die öl- und wasserabweisenden Effekte noch geringfügig angehoben und - hier liegt ein besonderer Vorteil - die Waschbeständigkeit dieser Effekte merklich verbessert. Diese guten Effekte treten ein, obwohl nur geringe Mengen an Fluorverbindungen (bezogen auf Fluor) zum Einsatz kommen. Als besonderer Vorteil ist aber hervorzuheben, daß die Flottenstabilität in hohem Maße gegeben ist. Vor allem ist überraschenderweise festzustellen, daß auch bei Mitverwendung von silikonhaltigen Produkten stabile Flotten und vor allem sichere Originalwerte mit guter Waschbeständigkeit erhalten werden.

Es muß dabei als besonders überraschend angesehen werden, daß allein durch die beschriebene Silikon-Modifizierung der Perfluoralkylgruppen enthaltenden Polyurethane (Verbindungen 1), also in Abwesenheit eines üblicherweise benutzten Extenders, die Gesamtheit der Effekte auf ein hohes Niveau gebracht werden konnte, nachdem dem Fachmann bekannt ist, daß bei der Verwendung von Silikonextendern die Ölabweisung im Rahmen dieser kombinierten Ausrüstung weitgehend verloren geht.

Die vorliegende Erfindung wird in den nachfolgenden Beispielen näher beschrieben, wobei Teile = Gewichtsteile und Prozentangaben = Gewichtsprozent sind.

Herstellung des Perfluoralkyldiols

In einem beheiz- und kühlbaren Gefäß mit Rührer, Thermometer, Rückflußkühler und Trichter werden 1012,4 Teile 2-(Perfluoralkyl)-ethanthiol (durchschnittlich $C_{10}F_{21}$-im $R_f$-Rest) und 75,2 Teile Butin-(2)-diol-(1,4) unter Stickstoff gemischt, dann werden ebenfalls unter Stickstoff 278 Teile m-Xylolhexafluorid zugegeben und auf 60 °C aufgeheizt. Nach dem Lösen wird eine Katalysatorlösung (Lösung von 39,2 Teilen Azobis-(2,4-dimethylvaleronitril)in 50 Teilen Methylenchlorid) portionsweise (1,6 ml pro 5 Minuten) innerhalb von 4 Stunden zugegeben, wobei nach 1 Stunde ein deutlicher Temperaturanstieg auf über 76 °C erkennbar ist. Nach beendeter Katalysatorzugabe wird noch 4 Stunden bei 60 °C zur vollständigen Umsetzung nachgerührt. Das erhaltene Produkt ist ca. 75%-ig an Bisperfluoralkyldiol und weist einen Fluorgehalt von ca. 45% auf.

Beispiel 1

In einem entsprechend dimensionierten 4-Halskolben mit Rückflußkühler (mit Trockenrohr), Stickstoffzuführung, Thermometer und Rührer werden folgende Ausgangssubstanzen miteinander gemischt:
33,4 Teile der oben hergestellten Perfluoralkyldiollösung,
3,2 Teile Trimethyl-hexamethylendiisocyanat (Isomerengemisch),
9,2 Teile DDI®-1410 Diisocyanat,
28,8 Teile Butylacetat sowie
0,15 % bezogen auf obiges Gemisch, an Katalysatorlösung (Dibutylzinndilaurat und Triethylamin im Verhältnis 4 : 1, 10 %ig in Butylacetat). Dieses Gemisch wird 4 Stunden bei 90 °C unter Stickstoff gerührt (Blockbildung im Äqualenzverhältnis OH- zu Isocyanatgruppen von 2 : 3) und dann werden 10 Teile Polysiloxan (α,ω-carbinolfunktionelles Dimethylpolysiloxan mit einem Molekulargewicht von ca. 1000 und

$$-\overset{|}{\underset{|}{Si}}-CH_2-CH_2-CH_2-OH\text{-Endgruppen,}$$

Viskosität ca. 45 mPa.s, Brechungsindex $n_D^{25}$ ca. 1,415 und OH-Zahl 110) und 10 Teile Butylacetat sowie nochmals die gleiche Menge der obengenannten Katalysatorlösung zugegeben und weitere 4 Stunden bei 90 °C gerührt. Das Produkt weist keine NCO-Gruppen mehr auf.
Zur Emulgierung werden 80 Teile der obigen Lösung bei 70 °C in ein auf 70 °C erwärmtes Gemisch aus 250 g Wasser, 4 g Emulgator (Dodecyloxipropylamin ethoxiliert mit durchschnittlich 12 Mol Ethylenoxid in Form des Acetats) und 24 g Ethylglykol einturbiniert und bei 300 bar auf einer Hochdruckhomogenisiervorrichtung bei 50 bis 60 °C homogenisiert. Abschließend wird das Lösungsmittel im Rotationsverdampfer abgezogen und eine Dispersion mit einem Feststoffgehalt von 17,8 % (Fluorgehalt 5,25 %) erhalten.

Beispiel 2

In der gleichen Vorrichtung wie im Beispiel 1 beschrieben, werden
66,8 Teile obigen Perfluoralkyldiols,
10,7 Teile Trimethyl-hexamethylendiisocyanat (Isomerengemisch),
43,8 Teile Butylacetat, sowie
0,18 %, bezogen auf obiges Gemisch, der im Beispiel 1 genannten Katalysatorlösung während 4 Stunden bei 90 °C unter Stickstoff umgesetzt (Endpunkt bestimmt durch Überprüfung auf NCO-Gruppenfreiheit), dann werden 80 Teile Polysiloxan (chemischer Aufbau wie das im Beispiel 1 beschriebene Polysiloxan mit einem Molekulargewicht von ca. 8000) und 80 Teile Butylacetat sowie nochmals die gleiche Menge Katalysatorlösung zugegeben und 6 Stunden bei 100 °C zur Reaktion gebracht. In gleicher Weise wie im Beispiel 1 beschrieben, wird - gegebenenfalls durch Auffüllen mit Wasser - eine 20 %ige Dispersion hergestellt.

Beispiel 3

Das Beispiel 1 wird wiederholt mit folgenden Mengen an Verbindungen für den ersten Reaktionsschritt: 116,7 Teile des genannten Perfluoralkyldiols, 8,4 Teile des genannten Diisocyanats, 24,5 Teile DDI®-1410-Diisocyanat und 90,7 Teile Butylacetat.
Alle Verfahrensmaßnahmen und übrigen Ausgangsverbindungen entsprechen dem Beispiel 1 (Blockbildung

im Äquivalenzverhältnis OH- zu NCO-Gruppen von 7:8).

Der Feststoffgehalt wird auf 20 % eingestellt und eine Dispersion mit 7,17 % Fluor erhalten.

Beispiel 4

In der im Beispiel 1 beschriebenen Apparatur werden
83,5 Teile des oben hergestellten Perfluoralkyldiols,
24,5 Teile DDI®-1410 Diisocyanats,
65,8 Teile Butylacetat,
0,23 Teile einer 10 %igen Lösung von Dibutylzinndilaurat in Butylacetat und 0,06 Teile einer 10 %igen Lösung von Triethylamin in Butylacetat zusammengegeben und unter Rühren unter Stickstoff auf 80 °C aufgeheizt. Nach 3 Stunden waren keine freien NCO-Gruppen mehr nachweisbar (Äquivalenzverhältnis im Block-Polymer OH- : Isocyanatgruppen von 5:4).

Nun werden 10 Teile Polysiloxan (α,ω-epoxyfunktionelles Dimethylpolysiloxan mit einem Molekulargewicht von ca. 1000), 10 Teile Butylacetat sowie 0,5 Teile einer 10 %igen Lösung von Triethylamin in Butylacetat zugegeben und ebenfalls unter Rühren und unter Stickstoff auf 80 °C aufgeheizt. Nach einer Reaktionszeit von insgesamt 9 Stunden hat das Gemisch ausreagiert und es ist keine Änderung in der Epoxizahl mehr feststellbar. Zur Herstellung einer wäßrigen Dispersion werden 80 Teile des wie beschrieben hergestellten Produktes von 70 °C in die im Beispiel 1 beschriebene Mischung (ebenfalls mit einer Temperatur von 70 °, aber als Emulgator 4 g eines ethoxilierten $C_{16-18}$ Fettalkohols mit 25 Mol Ethylenoxid je Mol Fettalkohol) einturbiniert und auf einer Hochdruckhomogenisiermaschine bei 50 bis 60 °C und 300 bar eine fertige, blaustichige Dispersion erhalten.

Abschließend wird das Lösungsmittel im Rotationsverdampfer abgezogen und durch Auffüllen mit Wasser auf einen Feststoffgehalt von 20 % (Fluorgehalt 5,9 %) eingestellt.

Beispiel 5

0,04 Mol eines Perfluoralkyldiols (siehe Beispiel 40 der US-PS 4 054 592) werden in der im Beispiel 1 beschriebenen Weise mit 0,025 Mol Isophorondiisocyanat und 0,025 Mol 1,6-Hexamethylendiisocyanat unter Stickstoff umgesetzt (Blockbildung im Äquivalenzverhältnis OH:NCO-Gruppen wie 4:5).

In dieses Gemisch werden bei 90 °C unter Rühren 25 g Polysiloxan (α,ω-epoxifunktionelles Dimethylpolysiloxan mit einem Molekulargewicht von ca. 2500 und einem Brechungsindex $n_D^{25}$ von ca. 1,4090), 25 g Butylacetat und 0,12 %, bezogen auf das gesamte Gemisch, der im Beispiel 1 genannten Katalysatorlösung zugegeben. Nach 3 Stunden bei 90 bis 110 °C sind IR-spektroskopisch keine NCO-Gruppen mehr nachweisbar. Entsprechend den Angaben im Beispiel 1 wird eine ca. 18 %ige Dispersion unter Verwendung von Nonylphenolpolyglykolether (5 Mol Ethylenoxid je Mol Nonylphenol) als Emulgator hergestellt.

Beispiel 6

Das Beispiel 1 wird wiederholt unter Verwendung von 6,4 Teilen Trimethylhexamethylendiisocyanat und 23 Teilen Butylacetat (1. Reaktionsschritt); Blockbildung im Äquivalenzverhältnis OH- zu Isocyanatgruppen 2:3) und 43,4 Teilen einer 2:1-Mischung (α,ω-carbinolfunktionelles Dimethylpolysiloxan vom Molekulargewicht 2500 (2 Teile) bzw. 8000 (1 Teil) beide mit

$$-\overset{|}{\underset{|}{Si}}-(CH_2)_3-OH\text{-Endgruppen}$$

und 43,4 Teilen Butylacetat (2. Reaktionsschritt). Die Emulgierung erfolgt wie im Beispiel 1 beschrieben zu einer 30 %igen Dispersion (5,51 % Fluor).

Ausrüstungsbeispiel 1

Ein dunkelblauer Baumwollköper (ca. 170 g/m²) und ein blauer Polyester/Baumwollmantelpopelin 67/33 (ca. 210 g/m²) werden mit nachfolgend genannten Flotten A bis C foulardiert (Flottenaufnahme ca. 69 % bzw. 63 %), bei 110 °C während 10 Minuten getrocknet und bei 150 °C während 5 Minuten kondensiert.

Flotte A 1

20 g/l einer ca. 70 %igen wäßrigen Aminoplastharzlösung (enthält mit Methanol verecherten Dimethyloldihydroxiethylenharnstoff und ca. 5 % Neutralsalz),

| | |
|---|---|
| 20 g/l | einer ca. 50 %igen wäßrigen Lösung von Pentamethylolmelaminmethylether, |
| 6 g/l | einer 30 %igen Zinknitratlösung (pH-Wert ca. 1,0), |
| 1 g/l | 60 %ige Essigsäure und |
| 51 g/l | Dispersion nach Beispiel 3. |

Flotte A 2

Wie Flotte A 1 mit 50 g/l Dispersion nach Beispiel 6 (fluorgleich mit Flotte A 1).

Flotte B

Wie Flotte A mit 61 g/l der Emulsion B nach Beispiel 1 der PCT-Anmeldung WO 86/02115 (gleicher Fluorgehalt wie Flotte A).

Flotte C

Wie Flotte A mit 30 g/l einer handelsüblichen Polymerdispersion auf Basis Perfluoralkylacrylat (®SCOTCHGARD FC 251 der Firma 3M Company) fluorgleich eingesetzt.

Die Ergebnisse der Ausrüstungen sind in den nachfolgenden Tabellen zusammengestellt, wobei es sich bei den Wäschen um übliche 60°C- bzw. 40°C Haushaltsmaschinenwäschen und bei den Chemisch-Reinigungen (CRM) um solche in Gegenwart von 2 g/l eines üblichen Reinigungsverstärkers und 2 g/l Wasser (Flottenverhältnis 1:10) handelt. Die Messungen wurden nach 5-tägigem Ausliegen unter Normalklima vorgenommen. Die Ölabweisung wurde dabei nach AATCC 118-1972, die Wasserabweisung nach DIN 53888 (a = Wasseraufnahme in %; b = Abperleffekt) bzw. dem Spraytest entsprechend AATCC 22-1974 durchgeführt. Die Bestimmung des Weichgriffeffektes erfolgt nach dem angegebenen Schlüssel:

Griff nach Bewertungsstufen:

1 = trockener, harter Griff
2 = trockener, etwas harter Griff
3 = mäßiger, etwas fülliger Weichgriff
4 = guter, etwas oberflächenglatter Weichgriff
5 = guter bis sehr guter, voluminöser, oberflächenglatter Weichgriff

6 = sehr guter bis hervorragender Weichgriff mit angenehmer Fülle und Oberflächenglätte

1) Baumwollgewebe

| | Original | | | | 5x60°C-Wäsche | | 1xCRM | | Griff | |
|---|---|---|---|---|---|---|---|---|---|---|
| | a | b | Spray | Öl | Spray | Öl | Spray | Öl | Original | nach 5x60°C-Wäsche |
| Flotte A 1 (erfindungsgemäß) | 4,6 | 5<br>5<br>5 | 3x100 | 5 | 3x100 | 4-5 | 3x100 | 4-5 | 4 (Soft-hand-Effekt) | 4 |
| Flotte A 2 (erfindungsgemäß) | 9,6 | 5<br>5<br>5 | 3x100 | 4-5 | 3x100 | 4-5 | 3x100 | 4-5 | 5-6 | 5 |
| Flotte B (Stand der Technik) | 7,4 | 5<br>5<br>5 | 3x100 | 4-5 | 3x100 | 4-5 | 3x100 | 4-5 | 2 | 2 |
| Flotte C (Stand der Technik) | 11,8 | 4<br>4<br>4 | 3x100 | 4-5 | 100<br>100-90<br>100-90 | 4 | 100<br>100<br>100-90 | 4 | 1-2 | 2 |
| unbehandelt | 102 | 1 | 0 | 0 | - | | - | | - | - |

2) Baumwoll/Polyester-Mischgewebe

| | Original | | | | 5x40°C-Wäsche | | 1xCRM | | Griff | |
|---|---|---|---|---|---|---|---|---|---|---|
| | a | b | Spray | Öl | Spray | Öl | Spray | Öl | Original | nach 5x40°C-Wäsche |
| Flotte A 1 (erfindungsgemäß) | 2,5 | 5<br>5<br>5 | 3x100 | 4-5 | 3x100 | 4-5 | 3x100 | 4-5 | 4 (Soft-hand-Effekt) | 4 |
| Flotte A 2 (erfindungsgemäß) | 3,9 | 5<br>5<br>5 | 3x100 | 4-5 | 3x100 | 4-5 | 3x100 | 4-5 | 5-6 | 5 |
| Flotte B (Stand der Technik) | 3,3 | 5<br>5<br>5 | 3x100 | 4-5 | 3x100 | 4-5 | 3x100 | 4-5 | 2 | 2 |
| Flotte C (Stand der Technik) | 5,9 | 5<br>5<br>4 | 3x100 | 3-4 | 100<br>100-90<br>100-90 | 3-4 | 3x100 | 3-4 | 1-2 | 2 |
| unbehandelt | 51 | 1 | 0 | 0 | - | | - | | - | - |

Ausrüstungsbeispiel 2

Der im Ausrüstungsbeispiel 1 genannte Polyester/Baumwollmantelpopelin wird mit einer Flotte entsprechend Ausrüstungsbeispiel 1 ausgerüstet, wobei aber anstelle der Dispersion nach Beispiel 3 die gleiche Menge einer Dispersion nach Beispiel 1 (Flotte A) und zusätzlich 20 g/l einer handelsüblichen, nichtionogenen, feinteiligen, wäßrigen 20 %igen Polyethylenwachsdispersion (50 % Nonylphenol ethoxyliert mit

15 Mol Ethylenoxid, bezogen auf Polyethylenwachs, als Emulgator; Polyethylenwachs mit einer Dichte von ca. 1 g/cm³ bei 20°C, Säurezahl 13, Verseifungszahl ca. 22; Flotte B) mitverwendet werden.

Die Ergebnisse dieser Ausrüstung sind in nachfolgender Tabelle zusammengefaßt:

| | Original | | | | 5x40°C-Wäsche | | 1xCRM | |
|---|---|---|---|---|---|---|---|---|
| | a | b | Spray | Öl | Spray | Öl | Spray | Öl |
| Flotte A) (erfindungsgemäß) | 10 | 5<br>5<br>5 | 3x100 | 4-5 | 3x100 | 4-5 | 3x100 | 4 |
| Flotte B) (erfindungsgemäß) | 7 | 5<br>5<br>5 | 3x100 | 5 | 3x100 | 4-5 | 3x100 | 4 |

| Griff | Original | nach 5x40°C-Wäsche |
|---|---|---|
| A)<br>B) | 5 (-6)<br>6 + | 5-6<br>6 |
| (sehr guter Soft-hand-Effekt) | | |

Durch die Mitverwendung von Polyethylenwachsdispersionen werden die Hydrophob/Oleophob-Effekte stabilisiert und vor allem nochmals eine spürbare Verbesserung der Griffeffekte erreicht.

Ausrüstungsbeispiel 3

Ein schwarz eingefärbtes Baumwoll-/Polyester-Mischgewebe (33/67 mit 130 g/m²) wird mit den nachfolgend genannten Flotten A bis C foulardiert, auf 57% Flottenaufnahme abgequetscht, 10 Minuten bei 100°C getrocknet und dann 5 Minuten bei 150°C kondensiert.

Flotte A

| | |
|---|---|
| 2,4 g/l | eines ca. 70%-igen, wäßrigen, handelsüblichen Cellulosevernetzers (Mischung aus Dimethyloldihydroxyethylenharnstoff und mit Methanol verethertem Pentamethylolmelamin 5:1) (I), |
| 1,6 g/l | einer wäßrigen, schwach sauren 55%-igen Zinkchloridlösung (II), |
| 5,2 g/l | eines handelsüblichen, nichtionischen Extenders auf Basis von fettmodifiziertem Melaminharz (Wirksubstanz ca. 12%) (III), |
| 2ml/l | 60%-ige Essigsäure (IV), |
| 16ml/l | eines handelsüblichen, alkoholischen Netzmittels (V), |
| 12,5 g/l | ASAHI GUARD AG 310 (VI) und |
| 12,5 g/l | der nach Beispiel 3 hergestellten Dispersion des modifizierten Polyurethans (VII). |

Flotte B

Wie Flotte A, mit je 10 g/l der Komponenten (VI) und (VII),

Flotte C

Wie Flotte A, mit je 7,5 g/l der Komponenten (VI) und (VII).

Die nach 8-tägigem Ausliegen im Normalklima erhaltenen öl- und wasserabweisenden Werte (Ölabweisung bestimmt nach AATCC 118-1972 und Wasserabweisung nach dem Spraytest entsprechend AATCC 22-1974) sind in der folgenden Tabelle zusammengestellt:

| Flotte | Ölabweisung | | Spraytest | |
|---|---|---|---|---|
| | Original | 1 X 50 ° C-Maschinenwäsche | Original | 1 X 50 ° C-Maschinenwäsche |
| A | 4-5 | 4 | 3X100 | 3X100 |
| B | 4-5 | 4 | 3X100 | 3X100 |
| C | 4-5 | 4 | 3X100 | 3X100 |
| unbehandelt | 0 | - | 0 | 0 |

Es werden trotz der geringen Einsatzmengen an Fluorchemikalien gute bis sehr gute öl- und wasserabweisende Effekte erhalten, wobei besonders auch der gute, voluminöse, oberflächenglatte Weichgriff der behandelten Textilien hervorzuheben ist.

Ausrüstungsbeispiel 4

In gleicher Weise, wie im Ausrüstungsbeispiel 3 beschrieben, wird ein graues Baumwoll-/Polyamid-Mischgewebe (33/67 mit 110 g/$m^2$) mit folgender Flotte (Flottenaufnahme 55%) behandelt:

10 g/l einer nichtionischen Emulsion, enthaltend ca. 30% aminofunktionelles $\alpha$, $\omega$-Dihydroxidimethylpolysiloxan,
20 g/l einer kationischen Dispersion enthaltend ca. 22% eines handelsüblichen, oxidierten Polyethylens,
34 g/l des im Ausrüstungsbeispiel 3 verwendeten Extenders,
0,5ml/l 60%-ige Essigsäure,
3 g/l einer 20%-igen, wäßrigen Lösung von Octadecyloximethylpyridiniumchlorid, sowie
30 g/l einer 1:1 Mischung von ASAHI GUARD AG 310 und der nach Beispiel 3 hergestellten Dispersion des modifizierten Polyurethans.

Die hervorragenden öl- und wasserabweisenden Effekte zeigt die nachfolgende Tabelle:

| | Ölabweisung | | Spraytest | |
|---|---|---|---|---|
| | Original | 1 X 50 ° C Maschinenwäsche | Original | 1 X 50 ° C Maschinenwäsche |
| erfindungsgem. Ausrüstung | 4-5 | 4 | 3X100 | 3X100 |
| unbehandelt | 0 | - | 0 | - |

Das ausgerüstete Gewebe zeigt einen sehr guten Weichgriff mit angenehmer Fülle und Oberflächenglätte.

## Patentansprüche

**1.** Modifizierte, perfluoraliphatische Gruppen enthaltende Polyurethane, erhältlich durch Umsetzung von perfluoraliphatische Gruppen ($R_f$) enthaltenden, 1 bis 18 C-Atome aufweisenden Diolen mit Di- und/oder Polyisocyanaten zu freie Hydroxyl- oder Isocyanatgruppen und $R_f$ enthaltenden Oligo- und/oder Polyurethanen (Verbindungen 1) und nachfolgende Umsetzung dieser Verbindungen 1 bei einer Temperatur im Bereich von 30 bis 180 ° C mit Polysiloxanen, welche mindestens 2 funktionelle Gruppen aufweisen, die mit den freien Hydroxyl- bzw. den freien Isocyanatgruppen der Verbindungen 1 reagieren können, wobei diese funktionellen Gruppen Epoxi-, Carboxi-, Hydroxy-, Amino- und/oder Amidogruppen sind, wobei das Äquivalenzverhältnis der freien Hydroxyl- bzw. Isocyanatgruppen der Oligo(poly)urethane zu den damit reagierenden di-/mehrfunktionellen Gruppen der Polysiloxane so gewählt worden ist, daß alle reaktiven Gruppen der Verbindungen (1) umgesetzt worden sind.

**2.** Modifizierte Polyurethane nach Patentanspruch 1, dadurch gekennzeichnet, daß als Verbindungen (1) freie Hydroxylgruppen und perfluoraliphatische Gruppen enthaltende Oligo- und/oder Polyurethane (Verbindungen 1 a) mit Polysiloxanen (Verbindungen 2 a) umgesetzt worden sind, in denen die di-/mehrfunktionellen Gruppen Epoxi- oder Carboxigruppen waren.

**3.** Modifizierte Polyurethane nach Patentanspruch 2, dadurch gekennzeichnet, daß die Verbindungen (1 a) mit $\alpha$, $\omega$-funktionellen Polysiloxanen umgesetzt worden sind.

4. Modifizerte Polyurethane nach Patentanspruch 1, dadurch gekennzeichnet, daß als Verbindungen (1) freie Isocyanatgruppen und perfluoraliphatische Gruppen enthaltende Oligo- und/oder Polyurethane (Verbindungen 1 b) mit Polysiloxanen (Verbindungen 2 b) umgesetzt worden sind, in denen die di-/mehrfunktionellen Gruppen OH, insbesondere Carbinol- und Amin/Amidgruppen waren.

5. Modifizierte Polyurethane nach Patentanspruch 4, dadurch gekennzeichnet, daß die Verbindungen (1 b) mit $\alpha$, $\omega$-funktionellen Polysiloxanen umgesetzt worden sind.

6. Modifizierte Polyurethane nach den Patentansprüchen 4 und 5, dadurch gekennzeichnet, daß Verbindungen (1) umgesetzt worden sind, die ihrerseits durch Umsetzung von $R_f$-alkylgruppen enthaltenden Diolen mit 1 bis 18, insbesondere 6 bis 16 C-Atomen im Perfluoralkylrest und Di/polyisocyanaten bzw. deren Gemischen im Äquivalenzverhältnis (OH- zu Isocyanatgruppen) von 2:3 bis 14:15 unter Blockbildung erhalten worden sind (Verbindung 1 b).

7. Modifizierte Polyurethane nach den Patentansprüchen 1 bis 6, dadurch gekennzeichnet, daß die Umsetzung der Verbindungen 1 mit Polysiloxanen bei 80 bis 120 ° C erfolgt ist.

8. Modifizierte Polyurethane nach den Patentansprüchen 1 bis 7, dadurch gekennzeichnet, daß das Äquivalenzverhältnis bei der Umsetzung der Verbindungen (1) mit den Verbindungen (2) so gewählt wird, daß ein geringer Überschuß an di-/mehrfunktionellen Gruppen des Polysiloxans zugegen gewesen ist.

9. Modifizierte Polyurethane nach den Patentansprüchen 1 bis 8, dadurch gekennzeichnet, daß in Inertgasatmosphäre umgesetzt worden ist.

10. Modifizierte Polyurethane nach den Patentansprüchen 1 bis 9, dadurch gekennzeichnet, daß in Gegenwart eines Katalysators/Katalysatorgemisches umgesetzt worden ist.

11. Verwendung der modifizierten, perfluoraliphatische Gruppen enthaltenden Polyurethane nach den Patentansprüchen 1 bis 10 in Form organischer Lösungen oder wäßriger Dispersionen zur öl- und wasserabweisenden Ausrüstung von Fasermaterialien, insbesondere Textilien.

12. Verwendung nach Patentanspruch 11, dadurch gekennzeichnet, daß den wäßrigen Dispersionen bis zu 100 Gew.%, insbesondere 30 bis 50 Gew.%, bezogen auf die Dispersion des modifizierten Polyurethans, einer 20 bis 35 %igen Dispersion eines emulgierbaren Polyethylens (Polyethylenwachs) mit einer Dichte (bei 20 ° C) von mindestens 0,92 g/$cm^3$ und einer Säurezahl von mindestens 5 mitverwendet werden.

13. Verwendung nach Patentanspruch 12, dadurch gekennzeichnet, daß das emulgierbare Polyethylen eine Dichte von 0,95 bis 1,05 g/$cm^3$, eine Säurezahl von 10 bis 60 und eine Verseifungszahl von 15 bis 80 aufweist.

14. Verwendung nach den Patentansprüchen 11 bis 13, dadurch gekennzeichnet, daß weiterhin übliche Textilhilfsmittel in bekannter Weise mitverwendet werden.

15. Verwendung nach dem Patentanspruch 14, dadurch gekennzeichnet, daß als Textilhilfsmittel wasserabweisende Fluorkohlenstoffverbindungen in wäßriger Dispersion mit mindestens 5 Gew.% Fluor mitverwendet werden.

16. Verwendung nach Patentanspruch 15, dadurch gekennzeichnet, daß als Fluorkohlenstoffverbindungen, perfluoraliphatische Gruppen enthaltende Polymere bzw. Copolymere mitverwendet werden.

17. Verwendung nach den Patentansprüchen 15 und 16 dadurch gekennzeichnet, daß als Fluorkohlenstoffverbindung das ca. 9% Fluor enthaltende Produkte ®ASAHI-GUARD AG 310 mitverwendet wird.

18. Verwendung nach den Patentansprüchen 15 bis 17, dadurch gekennzeichnet, daß die wäßrigen Dispersionen in Mengen von 5 bis 40, insbesondere 7 bis 25 g/l, eingesetzt werden.

## Claims

1. Modified polyurethanes containing perfluoroaliphatic groups obtainable by reaction of diols containing perfluoroaliphatic groups ($R_f$) and having 1 to 18 C atoms with di- and/or polyisocyanates to give oligo- and/or polyurethanes containing free hydroxyl or isocyanate groups and $R_f$ (compounds 1), and subsequent reaction of these compounds 1, at a temperature in the range from 30 to 180 °C, with polysiloxanes which contain at least 2 functional groups and can react with the free hydroxyl or the free isocyanate groups of the compounds 1, these functional groups being epoxide, carboxyl, hydroxyl, amino and/or amido groups, and the ratio of the equivalents of the free hydroxyl or isocyanate groups of the oligo(poly)urethanes to the di-/polyfunctional groups of the polysiloxanes which react with these having been chosen such that all the reactive groups of the compounds (1) have been reacted.

2. Modified polyurethanes according to Patent Claim 1, characterised in that oligo- and/or polyurethanes containing free hydroxyl groups and perfluoroaliphatic groups (compounds 1 a) have been reacted as compounds (1) with polysiloxanes (compounds 2 a) in which the di-/polyfunctional groups were epoxide or carboxyl groups.

3. Modified polyurethanes according to Patent Claim 2, characterised in that the compounds (1 a) have been reacted with $\alpha,\omega$-functional polysiloxanes.

4. Modified polyurethanes according to Patent Claim 1, characterised in that oligo- and/or polyurethanes containing free isocyanate groups and perfluoroaliphatic groups (compounds 1 b) have been reacted as compounds (1) with polysiloxanes in which the di-/polyfunctional groups were OH, or in particular carbinol and amine/amide groups (compounds 2 b).

5. Modified polyurethanes according to Patent Claim 4, characterised in that the compounds (1 b) have been reacted with $\alpha,\omega$-functional polysiloxanes.

6. Modified polyurethanes according to Patent Claims 4 and 5, characterised in that compounds (1) which in turn have been obtained by reaction of diols which contain $R_f$-alkyl groups and have 1 to 18, in particular 6 to 16 C atoms in the perfluoroalkyl radical, and di/polyisocyanates or mixtures thereof in a ratio of equivalents (OH to isocyanate groups) of 2:3 to 14:15, to form blocks have been reacted (compound 1 b).

7. Modified polyurethanes according to Patent Claims 1 to 6, characterised in that the reaction of the compounds 1 with polysiloxanes is carried out at 80 to 120 °C.

8. Modified polyurethanes according to Patent Claims 1 to 7, characterised in that the ratio of the equivalents in the reaction of the compounds (1) with the compounds (2) is chosen such that a slight excess of di-/polyfunctional groups of the polysiloxane is present.

9. Modified polyurethanes according to Patent Claims 1 to 8, characterised in that the reaction has been carried out in an inert gas atmosphere.

10. Modified polyurethanes according to Patent Claims 1 to 9, characterised in that the reaction has been carried out in the presence of a catalyst/catalyst mixture.

11. Use of the modified polyurethanes containing perfluoroaliphatic groups according to Patent Claims 1 to 10 in the form of organic solutions or aqueous dispersions for oil- and water-repellant finishing of fibre materials, in particular textiles.

12. Use according to Patent Claim 11, characterised in that up to 100% by weight, in particular 30 to 50% by weight, based on the dispersion of the modified polyurethane, of a 20 to 35% strength dispersion of an emulsifiable polyethylene (polyethylene wax) having a density (at 20 °C) of at least 0.92 $g/cm^3$ and an acid number of at least 5, is also used with the aqueous dispersions.

13. Use according to Patent Claim 12, characterised in that the emulsifiable polyethylene has a density of 0.95 to 1.05 $g/cm^3$, an acid number of 10 to 60 and a hydrolysis number of 15 to 80.

14. Use according to Patent Claims 11 to 13, characterised in that customary textile auxiliaries are furthermore also used in a known manner.

15. Use according to Patent Claim 14, characterised in that water-repellant fluorocarbon compounds in an aqueous dispersion containing at least 5% by weight of fluorine are also used as textile auxiliaries.

16. Use according to Patent Claim 15, characterised in that polymers or copolymers containing perfluoroaliphatic groups are also used as the fluorocarbon compounds.

17. Use according to Patent Claims 15 and 16, characterised in that ®ASAHI-GUARD AG 310, which contains about 9% of fluorine, is also used as the fluorocarbon compound.

18. Use according to Patent Claims 15 to 17, characterised in that the aqueous dispersions are employed in amounts of 5 to 40, in particular 7 to 25 g/l.

**Revendications**

1. Polyuréthannes modifiés,contenant des groupes perfluoroaliphatiques, que l'on peut obtenir par réaction de diols, présentant 1 à 18 atomes de carbone et contenant des groupes perfluoroaliphatiques ($R_f$) avec des diisocyanates et/ou des polyisocyanates pour obtenir des oligo-uréthannes et/ou des polyuréthannes contenant des groupes hydroxyles ou isocyanates libres et $R_f$ (composés 1) et réaction subséquente de ces composés 1 , à une température se situant entre 30 et 180 °C,avec des polysiloxanes,qui présentent au moins 2 groupes fonctionnels capables de réagir avec les groupes hydroxyles libres ou avec les groupes isocyanates libres des composés I, ces groupes fonctionnels étant des groupes époxy, carboxy, hydroxy, amino et/ou amido , le rapport entre les équivalents des groupes hydroxyles ou isocyanates libres des oligo (poly)-uréthannes et ceux des groupes di-/poly-fonctionnels des polysiloxanes devant réagir avec eux ayant été choisi de manière que tous les groupes réactifs des composés (1) aient réagi .

2. Polyuréthannes modifiés selon la revendication 1 , caractérisés en ce qu'on a fait réagir, comme composés (1), des oligo- et/ou des polyuréthannes contenant des groupes hydroxyles libres et des groupes perfluoraliphatiques (composés 1a) avec des polysiloxanes (composés 2a) comportant comme groupes di-/poly-fonctionnels des groupes epoxy ou carboxy.

3. Polyuréthannes modifiés selon la revendication 2, caractérisés en ce qu'on a fait réagir les composés ( 1 a) avec des polysiloxanes $\alpha$ ,$\omega$ -fonctionnels .

4. Polyuréthannes modifiés selon la revendication 1,caractérisés en ce qu'on a fait réagir, comme composés (1), des oligo- et/ou des poly-uréthannes contenant des groupes isocyanates libres et des groupes perfluoraliphatiques (composés 1b) avec des polysiloxanes (composés 2b) qui contenaient comme groupes di-/polyfonctionnels des groupes OH, enparticulier des groupes carbinols, et amine/amide .

5. Polyuréthannes modifiés selon la revendication 4 , caractérisés en ce qu'on a fait réagir les composés (1 b) avec des polysiloxanes $\alpha$ ,$\omega$ -fonctionnels (contenant des groupes fonctionnels en position $\alpha$ ,$\omega$).

6. Polyuréthannes modifiés selon les revendications 4 et 5,caractérisés en ce qu'on a fait réagir des composés (1) qui ont été obtenus pour leur part par réaction de diols contenant des groupes $R_f$alkyles , ayant 1 à 18 , notamment 6 à 16,atomes de carbone dans le reste perfluoralkyle et de di-/poly-isocyanates ou leurs mélanges ,selon un rapport entre les équivalents (des groupes OH à isocyanates) de 2:3 à 14:15 ,avec formation de blocs ou longues séquences (composé 1b).

7. Polyuréthannes modifiés selon les revendications 1 à 6 , caractérisés en ce que la réaction des composés 1 avec des polysiloxanes est réalisée entre 80 et 120 °C.

8. Polyuréthannes modifiés selon les revendications 1 à 7 , caractérisés en ce que ,lors de la réaction des composés (1) avec les composés (2), le rapport entre les équivalents a été choisi de manière à avoir présence d'un léger excès de groupes di-/poly-fonctionnels du polysiloxane .

**9.** Polyuréthannes modifiés selon les revendications 1 à 8 , caractérisés en ce qu'on a fait réagir en atmosphère inerte .

**10.** Polyuréthannes modifiés selon les revendications 1 à 9 ,caractérisés en ce qu'on a fait réagir en présence d'un catalyseur /d'un mélange de catalyseurs .

**11.** Utilisation des polyuréthannes modifiés,contenant des groupes perfluoraliphatiques,selon les revendications 1 à 10 ,sous forme de solutions organiques ou de dispersions aqueuses pour conférer à des matières fibreuses,en particulier à des textiles, des caractéristiques de répulsion des huiles et de l'eau .

**12.** Utilisation selon la revendication 11 , caractérisée en ce qu'on a utilisé avec les dispersions aqueuses,jusqu'à 100 % en poids , en particulier 30 à 50 % en poids,par rapport à la dispersion du polyuréthanne modifié, d'une dispersion contenant 20 à 35 % d'un polyéthylène émulsifiable (cire de polyéthylène) ayant (à 20 ° C) une masse volumique d'au moins 0,92 g/$cm^3$ et un indice d'acide valant au moins 5 .

**13.** Utilisation selon la revendication 12 ,caractérisée en ce que le polyéthylène émulsifiable présente une masse volumique de 0,95 à 1,05 g/$cm^3$ , un indice d'acide de 10 à 60 et un indice de saponification de 15 à 80 .

**14.** Utilisation selon les revendications 11 à 13 ,caractérisée en ce qu'on utilise également , de façon connue, des adjuvants usuels pour textiles .

**15.** Utilisation selon la revendication 14 , caractérisée en ce qu'on co-utilise comme adjuvants pour textiles des composés fluorocarbonés hydrofuges,utilisés en une dispersion aqueuse contenant au moins 5 % en poids de fluor.

**16.** Utilisation selon la revendication 15 , caractérisée en ce qu'on co-utilise,comme composés fluorocarbonés, des polymères ou copolymères contenant des groupes perfluoraliphatiques .

**17.** Utilisation selon les revendications 15 et 16 , caractérisée en ce qu'on co-utilise,comme composé fluorocarboné ,le produit "ASAHI-GUARD AG 310"[R] contenant environ 9 % de fluor .

**18.** Utilisation selon les revendications 15 à 17 ,caractérisée en ce qu'on utilise les dispersions aqueuses en des quantités de 5 à 40 , en particulier 7 à 25 g/litre.